# EUROPEAN PATENT APPLICATION

(11) **EP 3 670 264 A1**
(43) Date of publication of application: **24.06.2020**
(21) Application number: 18213443.7
(22) Date of filing: 18.12.2018
(51) Int. Cl.: B60Q 1/48

(54) **VEHICLE WITH A POSITIONING INDICATOR**

(71) Applicant: Volvo Construction Equipment AB, 631 85 Eskilstuna (SE)
(72) Inventor: VERNERSSON, Krister, 352 45 Växjö (SE); GÅÅRD, Pär-Olof, 352 45 Växjö (SE)
(74) Representative: Valea AB

(57) **Abstract**

The vehicle (1) as disclosed herein comprises a body (2) having a front side (3), a rear end side (4) and a first and a second longitudinal side (5, 6), each longitudinal side extending in a longitudinal direction (L). The vehicle (1) has front and rear tyres (7, 8), wherein one of the rear tyres (8) is a first rear tyre arranged at the first longitudinal side. The vehicle (1) comprises a cabin (9) having an operator seat (10). The operator seat (10) is located adjacent the first longitudinal side. The vehicle (1) further comprises an operator side view arrangement (11) arranged at said first longitudinal side providing a rearward view with a line of sight (LS) extending to a location of interest (13) provided at a rear end of the vehicle. The vehicle (1) comprises a position indicator (12) provided at the first longitudinal side of the vehicle. The position indicator (12) is arranged at a location for providing position indication to the operator as to when the vehicle (1) is positioned at a pre-specified distance from the location of interest (13) by means of visual alignment of the position indicator (12) with the location of interest (13) in the line of sight (LS), as seen in the operator side view arrangement (11).

## Description

### TECHNICAL FIELD

The invention relates to a vehicle comprising a position indicator. More specifically, the invention relates to a vehicle comprising a position indicator providing position indication at the vehicle rear end in respect to a location of interest.

The invention may be applied in heavy-duty vehicles, such as trucks and machinery.

### BACKGROUND

Larger vehicles, such as for example articulated haulers and trucks are adapted to load, transport and unload large masses of material. When reversing the vehicle for positioning and/or unloading it is important to position the vehicle at the pre-determined location, for example when unloading larger masses of material it is important that this is done at the correct location. In the case wherein unloading is done over an edge, aligning the vehicle in relation to the edge may prove difficult. Reversing to far may result in that the vehicle falls over the edge. Unloading too far from the edge may in turn result in additional work needed to be carried out to relocate the unloaded material.

Currently, reversing is done using rear view mirrors/side mirrors or a rear view camera. However, mirrors may give a non-satisfactory view of the location of interest and require a trained eye for accurately determining a portion, while rear-view cameras are costly, complex and subject to dirtying, especially in the work environment of a heavy-duty vehicle. Furthermore, rear-view cameras are generally arranged to provide a rearward vision further away from the vehicle to earlier detect a vehicle obstacle.

Accordingly, there is a need for a reliable, cost efficient technical solution that makes it easier for an operator to align the vehicle in relation to the unloading spot in a safe manner.

### SUMMARY

An object of the invention is to provide a vehicle with an improved position indicator in relation to a pre-determined location of interest at the rear end of a vehicle.

This and other objects are at least partly achieved by a vehicle according to claim 1.

The vehicle as disclosed herein comprises a body having a front side, a rear end side and a first and a second longitudinal side, each longitudinal side extending in a longitudinal direction. The vehicle has front and rear tyres, wherein one of the rear tyres is a first rear tyre arranged at the first longitudinal side. The vehicle comprises a cabin having an operator seat. The operator seat is located adjacent the first longitudinal side. The vehicle further comprises an operator side view arrangement arranged at said first longitudinal side providing a rearward view along a line of sight extending to a location of interest at a rear end of the vehicle: The vehicle comprises a position indicator provided at the first longitudinal side of the vehicle. The position indicator is arranged at a location for providing position indication to the operator as to when the vehicle is positioned at a pre-specified distance from the location of interest by means of visual alignment of the position indicator with the location of interest in the line of sight, as seen in the operator side view arrangement.

By the provision of a position indicator according to the present disclosure the operator is provided with an improved means of knowing when the vehicle rear end is positioned at a pre-defined location. The position indicator according to the present invention is both easy to use, reliable and cost-efficient.

The operator side view arrangement may be a side view mirror and/or a side view camera. In its simplest form the operator side view arrangement may be a side window arranged at the first longitudinal side of the vehicle through which the operator may lean out and have a rearward view.

The operator seat is located adjacent the first longitudinal side such that the operator is provided with a rearward side view by means of the operator side view arrangement, and such that the position indicator is visible when utilizing the operator side view arrangement. The operator seat may, depending on the configuration of the vehicle, such as for certain machinery, be provided in a central positon, as seen in a transverse direction of the vehicle, or closer to the first longitudinal side than to the second longitudinal side of the vehicle. In both of these examples, the operator seat should be construed as being located adjacent the first longitudinal side.

The location of interest may be at a ground level of the vehicle. The location of interest may for example be an edge of a slope, when unloading is done over an edge, or an existing pile of material.

The position indicator may be adapted to provide indication to the operator when a rear part of the first rear tyre is positioned at a pre-defined distance from the location of interest. This may for example be of use if the location of interest is an obstacle or edge on ground level.

The location of interest may be at a predetermined distance in relation to the first rear tyre. The first rear tyre may be the rearmost tyre arranged at the first longitudinal side. The predetermined distance from the rearmost part of the first rear tyre to the location of interest may be for example 0 to 2000 mm behind the first rear tyre, such as from about 100 mm to 2000 mm, such as from 100 mm to 1500 mm, such as from 100 mm to 1000 mm behind the first rear tyre.

The location of interest may be at a predetermined distance in relation to the rear end side of the vehicle body. The predetermined distance from the rear end side of the vehicle body to the location of interest may for example 0 to 2000 mm behind the first rear tyre, such as from about 100 mm to 2000 mm, such as from 100 mm to 1500 mm, such as from 100 mm to 1000 mm behind the rear end side of the vehicle body.

The line of sight may extend laterally outside the rear tyres. This is a result of the line of sight extending from the operator side view arrangement to a location of interest at the rear end of the vehicle. The line of sight may additionally include the rear tyres, and includes the position indicator.

The position indicator may be selected among: a contrasting colour indication, a through-hole, a reflector, a point of light, a protruding element or any combination thereof. Such position indicators are cost efficient and reliable. In respect of a reflector or a point of light, an advantage is also that they are easily visible also during poorer lighting conditions.

The position indicator may be positioned along a rear portion of the vehicle, the rear portion having a length in the longitudinal direction of 1/2 of a total length of the vehicle. The rear portion should thus be construed as a rear end distance of the entire vehicle. An articulated hauler, for which the present invention is particularly useful, comprises a rear part, comprising a dump body, connected at an articulation joint with a front part which includes the vehicle cabin. The longitudinal distance of the rear part is larger than the longitudinal distance of the front part. The distance between the front side of rear part and the position indicator is preferably smaller than the distance between the rear side of the rear part and the position indicator.

The position indicator may be arranged on an element of the body having a primary function other than position indication. The position indicator may thus for example be arranged on a mud flap or a tyre, such as a rear tyre, provided on the vehicle at the first longitudinal side. The mud flap may for example be provided with a contrasting colour indication or a through hole or a notch.

The fact that the position indicator is arranged on an element of the body having a primary function other than position indication provides the vehicle with position indication by means of an easy and cost efficient modification of the vehicle without the need for special holders etc.

The position indicator may comprise a light emitting device and a reflecting point of light emitted by the light emitting device.

The reflecting point of light may be arranged to be reflected on one of the rear tyres arranged at the first longitudinal side. This ensures that even though the tyres are moving, the reflecting point of light remains fixed.

The vehicle may comprise a dump body adapted for transporting and depositing material on the ground and behind the vehicle. The position indicator according to the present disclosure may be of significant importance for a vehicle comprising a dump body, for example when unloading is done over an edge of a slope as accurately aligning the vehicle in relation to the edge is often found difficult. Reversing too far may result in that the rear part of the vehicle slides down over the edge or in worst case that the vehicle falls over the edge. Unloading too far from the edge may in turn result in additional work needed to be carried out to relocate the unloaded material.

Optionally, the operator side view arrangement is provided with a marker and the line of sight extends from the marker and to the location of interest.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: show a side view of a vehicle provided with a position indicator and with a line of sight extending from an operator side view arrangement to a location of interest according to the present disclosure;
- Fig. 2a: shows the line of sight of the operator in an operator side view arrangement prior to that the vehicle is positioned in a desired position in relation to a pre-specified location and prior to the position indicator being visually aligned with the location of interest;
- Figs. 2b-d: show a first rear tyre and a mud flap provided with a position indicator providing position indication to an operator during reversing of the vehicle; and
- Figs. 3-5: illustrate a vehicle according to the present disclosure during the course of reversing to reach a pre-determined position in relation to a location of interest.

### DETAILED DESCRIPTION OF EXAMPLE EMBODIMENTS OF THE INVENTION

It is to be understood that the drawings are schematic and that individual components are not necessarily drawn to scale. The vehicle, including the mud flap, position indicator and operator side view arrangement shown in the figures are provided as examples only and should not be considered limiting to the invention as disclosed herein. Furthermore, the size, shape and configuration of the vehicle, its components and the position indicator may be different from what is shown in the figures.

It is to be understood that the present invention is not limited to the embodiments described above and illustrated in the drawings; rather, the skilled person will recognize that many changes and modifications may be made within the scope of the appended claims. In particular, the invention is applicable to any type of vehicle where there may be a desire to drive the vehicle in a direction which is opposite to a primary direction of travel of the vehicle. Hence, the sighting arrangement as described herein may be supplied in addition to rear view arrangements such that a rear-view mirror and rear-view cameras and may be a supplement to such devices.

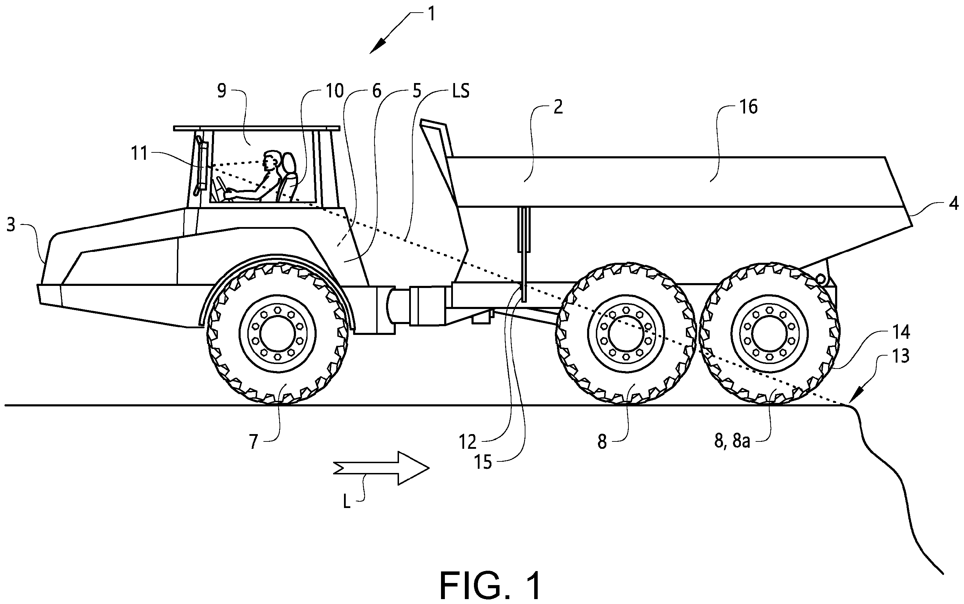

With reference to Fig. 1 there is shown a vehicle 1, here an articulated hauler. The vehicle 1 comprises a body 2 having a front side 3, a rear end side 4 and a first and second longitudinal side 5, 6. Each longitudinal side 5, 6 extends in a longitudinal direction L of the vehicle. The vehicle 1 has front and rear tyres 7, 8, wherein one of the rear tyres 8 is a first rear tyre 8a arranged at the first longitudinal side 5. The vehicle 1 comprises a cabin 9 having an operator seat 10. The operator seat 10 is located in proximity to the first longitudinal side 5 allowing the operator during reversing and unloading to have a rearward view through the operator side view arrangement 11 arranged at the first longitudinal side. The operator is provided with a rearward view with a line of sight LS extending to a location of interest 13 by means of the operator side view arrangement 11. The location of interest 13 is at a rear end of the vehicle 1, and more precisely on a ground level in proximity to a rear part 14 of the first rear tyre 8a. The location of interest may for example be from about 100 mm to 2000 mm, such as from 100 mm to 1500 mm, behind the rear part 14 of the first rear tyre 8a when the vehicle is correctly positioned in relation to the location of interest 13. In this figure the location of interest 13 is represented by an edge over which the vehicle 1 is intended to unload material from a dump body 16. The vehicle 1 is provided with a position indicator 12, arranged at the first longitudinal side 5 and at a location for providing position indication to the operator as to when the vehicle 1 is positioned at a pre-specified distance from the location of interest 13. When reversing the vehicle 1 for positioning and unloading it is important to position the vehicle 1 such that the unloading of material is done at the correct location. In this case wherein unloading is done over an edge 13, aligning the vehicle 1 in relation to the edge 13 may prove difficult. Reversing to far may result in that the vehicle 1 falls over the edge. Unloading too far from the edge 13 may in turn result in additional work needed to be carried out to relocate the unloaded material.

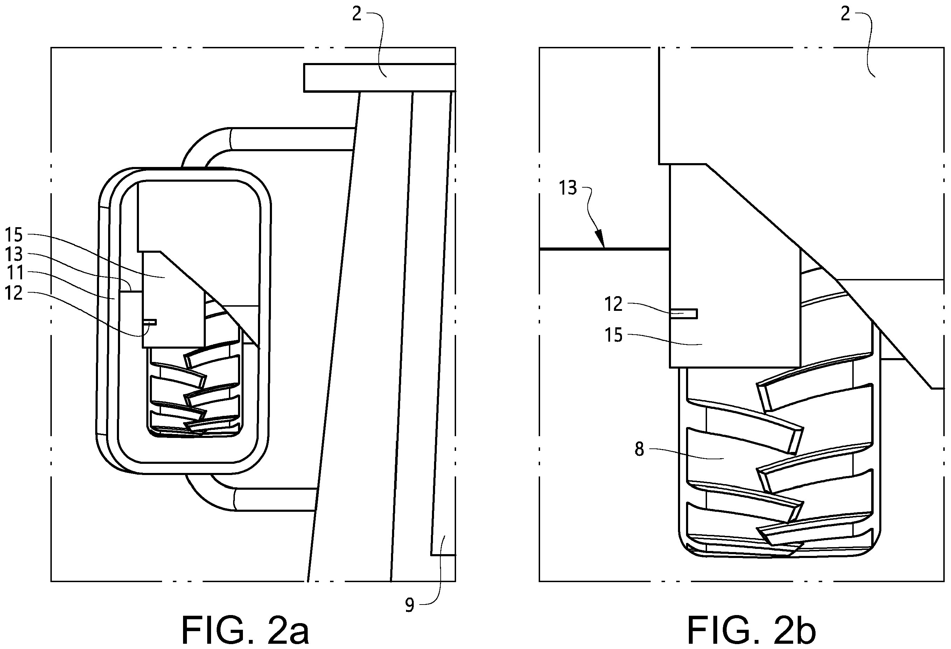

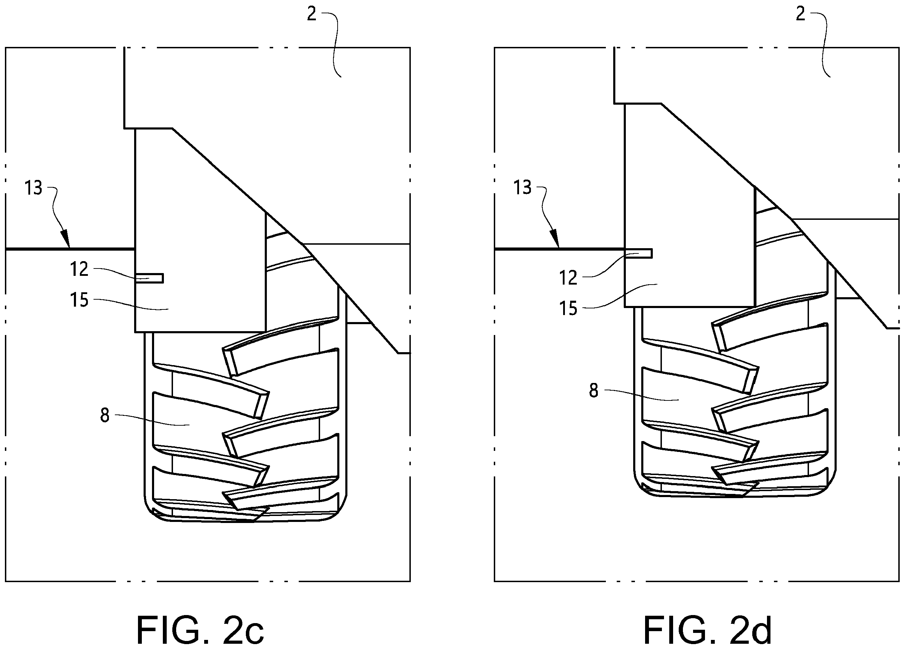

Figure 2a illustrates an operator side view arrangement 11, e.g. the operator side view arrangement in Figure 1, providing the operator in the cabin 9 with a rearward view with a line of sight LS providing a view of the position indicator 12, the first rear tyre 8a. The line of sight LS further extends laterally outside said rear tyres 8,8a to the location of interest 13, here represented by an edge. The position indicator 12 is in this figure provided on a mud flap 15 located in front of the rear tyre 8.

Figures 2b-2c illustrate the view of the operator as seen in the operator side view arrangement 11, illustrated in Fig. 2a, prior to aligning the position indicator 12 with the location of interest 13. The operator can thereby continuously check, during reversing of the vehicle, whether the vehicle has reached the location of interest 13 or whether the vehicle needs to be moved further.

In figure 2d the vehicle has reached the position where the position indicator 12 is aligned with the location of interest 13, as seen in the operator side view arrangement 11, indicating to the operator that the vehicle is correctly positioned in respect to the location of interest 13. Accordingly, the line of sight LS extends from the operator side view arrangement 11 to the location of interest 13 via the position indicator 12, as is also illustrated in figure 1.

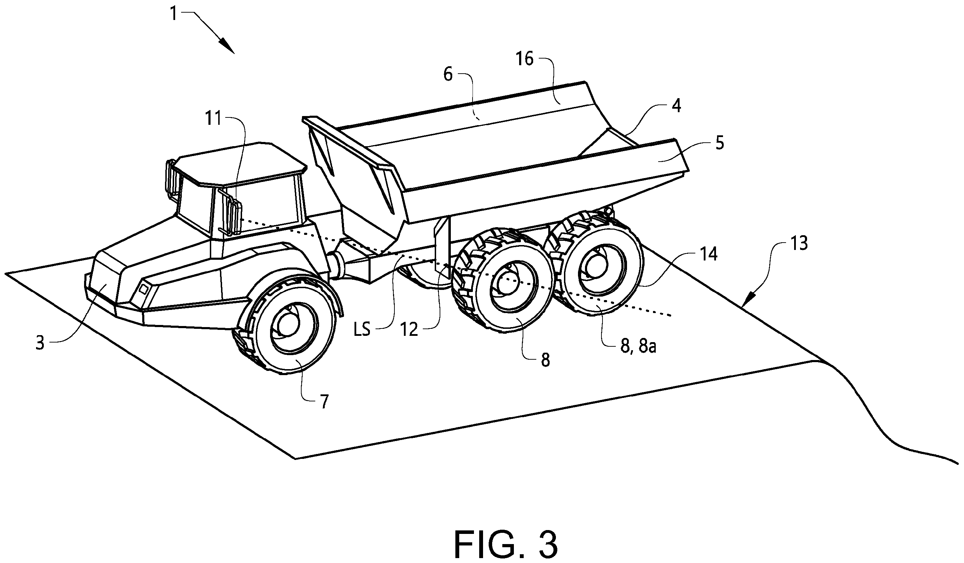

Figures 3-5 illustrate the vehicle 1 comprising a dump body 16 for transporting and unloading of material. The vehicle has a front side 3, a rear end side 4 and a first and second longitudinal sides 5,6. Each longitudinal side 5,6 extends in a longitudinal direction L of the vehicle. The vehicle 1 has front and rear tyres 7,8, wherein one of the rear tyres 8 is a first rear tyre 8a arranged at the first longitudinal side 5. During reversing of the vehicle 1 for unloading of the material in the dump body 16 the operator is provided with a rearward view through the operator side view arrangement 11 to correctly place the vehicle in respect to the location of interest 13, here in the form of an edge of a slope. The operator is thus provided with a rearward view with a line of sight LS extending to the location of interest 13 by means of the operator side view arrangement 11. If the operator is setting his line of sight to the position indicator 13, the operator is provided with an indication that the vehicle 1 is still too far away from the edge 13.

In figures 3-5, the location of interest 13 is represented by an edge over which the vehicle 1 is intended to unload material from a dump body 16. The vehicle 1 is provided with a position indicator 12, arranged at the first longitudinal side 5 and at a location for providing position indication to the operator as to when the vehicle 1 is positioned at a pre-specified distance from the location of interest 13. When reversing the vehicle 1 for positioning and unloading, it is important to position the vehicle 1 such that the unloading of material is done at the correct location. In this case, wherein unloading is done over an edge 13, aligning the vehicle 1 in relation to the edge 13 may prove difficult. Reversing too far may result in that the rear part of the vehicle 1 slides down over the edge 13 or in worst case that the vehicle 1 falls over the edge 13. Unloading too far from the edge 13 may in turn result in additional work needed to be carried out to shove the unloaded material over the edge.

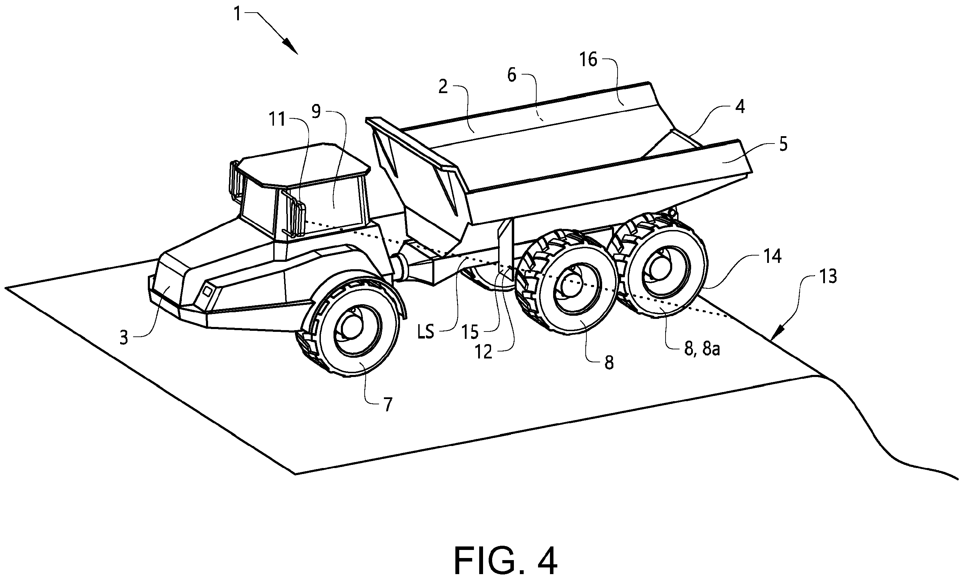

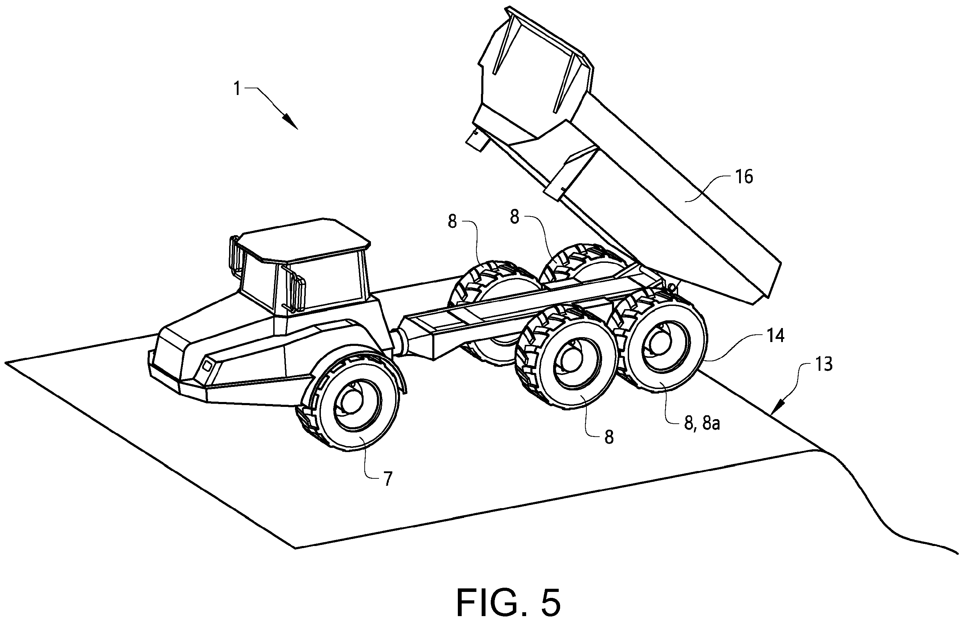

In figures 4 and 5, the vehicle 1 is correctly positioned in relation to the edge 13. The position indicator 12 is aligned with the location of interest 13, as seen in the operator side view arrangement 11. Thus, this provides the operator with the information that the vehicle is correctly positioned in respect to the location of interest 13 and that he may start to for example, as shown in figure 5, unloading the material from the dump body 16.

## Claims

1. A vehicle (1), comprising a body (2) having a front side (3), a rear end side (4) and a first and a second longitudinal side (5,6), each longitudinal side (5,6) extending in a longitudinal direction (L), said vehicle (1) having front and rear tyres (7,8), wherein one of said rear tyres (8) is a first rear tyre (8a) arranged at said first longitudinal side (5), said vehicle (1) comprising a cabin (9) having an operator seat (10), said operator seat (10) being located adjacent said first longitudinal side (5), wherein said vehicle further comprises an operator side view arrangement (11) arranged at said first longitudinal side (5) providing a rearward view with a line of sight (LS) extending to a location of interest (13) provided at a rear end of said vehicle (1), said vehicle (1) comprises a position indicator (12), said position indicator (12) is provided at said first longitudinal side (5) and is arranged at a location for position indication to said operator as to when said vehicle (1) is positioned at a pre-specified distance from said location of interest (13) by means of visual alignment of said position indicator (12) with said location of interest (13) in said line of sight (LS), as seen in said operator side view arrangement (11).

2. The vehicle (1) according to claim 1, wherein said location of interest (13) is located at a ground level of said vehicle (1).

3. The vehicle (1) according to claim 1 or 2, wherein said position indicator (12) is adapted to provide indication to said operator when a rear part (14) of said first rear tyre (8a) is positioned at a pre-defined distance from said location of interest (13).

4. The vehicle (1) according to claim 1, 2 or 3, wherein said location of interest (13) is located at a predetermined position in relation to said first rear tyre (8a).

5. The vehicle (1) according to any one of the preceding claims, wherein said line of sight (LS) extend laterally outside said rear tyres (8,8a).

6. The vehicle (1) according to any one of the preceding claims, wherein said position indicator (12) is selected among: a contrasting colour indication, a through-hole, a reflector, a point of light, a protruding element or any combination thereof.

7. The vehicle (1) according to any one of the preceding claims, wherein said position indicator (12) is positioned along a rear portion of said vehicle (1), said rear portion having a length in said longitudinal direction (L) of 1/2 of a total length of said vehicle (1).

8. The vehicle (1) according to any one of the preceding claims, wherein said position indicator (12) is arranged on an element of said body (2) having a primary function other than position indication.

9. The vehicle (1) according to claim 8, wherein said position indicator (12) is arranged on a mud flap (15) or a tyre (8,9), such as a rear tyre (8), provided on said vehicle (1) at said first longitudinal side (5).

10. The vehicle (1) according to any one of the preceding claims, wherein said position indicator (12) comprises a light emitting device and a reflecting point of light emitted by said light emitting device.

11. The vehicle (1) according to claim 10, wherein said reflecting point of light is arranged to be reflected on one of said rear tyres (8) arranged at said first longitudinal side (5).

12. The vehicle (1) according to any one of the preceding claims, wherein said vehicle (1) comprises a dump body (16) adapted for transporting and depositing material on the ground and behind said vehicle (1).

13. The vehicle (1) according to any one of the preceding claims, wherein said side view arrangement (11) is provided with a marker and said line of sight (LS) extends from said marker and to said location of interest (12).
